# EUROPÄISCHE PATENTSCHRIFT

(11) **EP 3 551 488 B1**
(45) Veröffentlichungstag und Bekanntmachung des Hinweises auf die Patenterteilung: **29.04.2020**
(21) Anmeldenummer: 17787106.8
(22) Anmeldetag: 06.10.2017
(51) Int. Cl.: B60K 6/387, F16D 13/64, F16D 13/68, F16D 13/69, F16D 13/72, F16D 13/74, F16D 13/52, F16H 45/02

(54) **HYBRID-TRIEBKOPF FÜR EIN KRAFTFAHRZEUG**
HYBRID TRACTION HEAD FOR A MOTOR VEHICLE
TÊTE DE TRACTION HYBRIDE POUR VÉHICULE AUTOMOBILE

(30) Priorität: 09.12.2016 DE 102016014672
(43) Veröffentlichungstag der Anmeldung: 16.10.2019
(73) Patentinhaber: Daimler AG, 70372 Stuttgart (DE)
(72) Erfinder: RUBE, Lukas, 70372 Stuttgart (DE); HEUKELBACH, Kai, 73257 Köngen (DE); KOPPITZ, Bernd, 73650 Winterbach (DE); SCHUSTER, Tobias, 73733 Esslingen (DE); ZIEGLER, Bernhard, 73098 Rechberghausen (DE); VELTHAUS, Jan, 70327 Stuttgart (DE); ZEHREN, Felix, 70327 Stuttgart-Wangen (DE)
(74) Vertreter: JENSEN & SON
(86) Internationale Anmeldenummer: PCT/EP2017/001180
(87) Internationale Veröffentlichungsnummer: WO 2018/103872

(56) Entgegenhaltungen:
- DE-A1-102008 006 155
- DE-A1-102009 022 272
- DE-A1-102011 089 751
- DE-A1-102014 223 712
- JP-A- 2003 322 177

## Beschreibung

Die Erfindung betrifft einen Hybrid-Triebkopf für ein Kraftfahrzeug.

Aus der DE 10 2008 006 155 A1 ist bereits ein Triebkopf für ein Kraftfahrzeug, mit zumindest einer Lamellenkupplung, die einen Innenlamellenträger, einen Außenlamellenträger und zumindest ein fest an dem Außenlamellenträger angebundenes Lamellenpaket aufweist, das zumindest zwei Lamellen umfasst, bekannt. Die Lamellen sind insbesondere von Stahllamellen mit federnden Stegen zur Reduzierung von Schleppverlusten gebildet.

Weiterhin ist aus der DE 10 2009 022272 A1 ein Hybrid-Triebkopf für ein Kraftfahrzeug, mit zumindest einer E-Maschine und mit zumindest einer Lamellenkupplung, gemäß dem Oberbegriff des Anspruchs 1, bekannt.

Der Erfindung liegt insbesondere die Aufgabe zugrunde, einen vorteilhaft kompakten Hybrid-Triebkopf bereitzustellen, bei welchem ein zuverlässiger Ölstrom bereitgestellt ist. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung schlägt einen Hybrid-Triebkopf für ein Kraftfahrzeug vor, mit zumindest einer E-Maschine und mit zumindest einer Lamellenkupplung, die einen Innenlamellenträger, einen Außenlamellenträger und zumindest ein fest an dem Innenlamellenträger angebundenes Lamellenpaket aufweist, das zumindest zwei Lamellen umfasst, welche jeweils an einem Innenumfang einen durchgehenden Ring aufweisen, wobei die zumindest eine Lamellenkupplung zumindest ein zwischen den zumindest zwei Lamellen angeordnetes Distanzelement aufweist, welches an einem Innenlamellenträger angeordnet ist und zu einer gleichmäßigen Beabstandung der Lamellen vorgesehen ist und zumindest eine Ölführungstasche aufweist, welche sich von dem Innenlamellenträger radial nach außen über die durchgehenden Ringe der Lamellen hinweg erstreckt. Die Lamellen der Lamellenkupplung sind insbesondere von Stahllamellen gebildet. Vorzugsweise ist die Ölführungstasche dazu vorgesehen, Öl an den durchgehenden Ringen der Lamellen vorbeizuführen. Dadurch kann insbesondere eine besonders zuverlässige Ölführung durch die Lamellenkupplung erreicht werden. Mittels der Ölführungstasche kann insbesondere erreicht werden, dass Öl in die Lamellenzwischenräume radial außerhalb des durchgehenden Rings gelangen kann. Hierdurch kann insbesondere ein ausreichender Volumenstrom zur Kühlung der Lamellen der Lamellenkupplung sichergestellt werden. Es kann insbesondere ein Temperaturniveau im Kupplungspaket gering gehalten werden. Ferner kann insbesondere eine vorteilhaft hohe Haltbarkeit der Lamellenkupplung erreicht werden. Es können Belagschäden vermieden werden. Hierdurch kann wiederum eine hohe Kundenzufriedenheit sowie eine hohe Qualität erreicht werden. Des Weiteren kann insbesondere ein konstanter Reibwertverlauf und damit eine hohe Regelgüte der Lamellenkupplung erreicht werden. Ferner kann eine Schädigung des Getriebeöls gering gehalten und damit vorteilhaft lange Ölwechselintervalle erreicht werden. Mittels der zumindest einen Ölführungstasche kann insbesondere ein gekapseltes Kupplungssystem, insbesondere ein gekapseltes KÜB System, ermöglicht werden. Unter einem "Hybrid-Triebkopf" soll in diesem Zusammenhang insbesondere ein Triebkopf eines Kraftfahrzeugs, insbesondere eines Hybrid-Kraftfahrzeugs, verstanden werden. Vorzugsweise soll darunter insbesondere ein Triebkopf verstanden werden, welcher zumindest eine E-Maschine umfasst. Bevorzugt soll darunter insbesondere eine Einheit eines Kraftfahrzeuggetriebes verstanden werden, welche entlang eines Antriebsstrangs vor einem eigentlichen schaltbaren Getriebe des Kraftfahrzeuggetriebes angeordnet ist. Besonders bevorzugt umfasst der Hybrid-Triebkopf zumindest eine E-Maschine und zumindest eine Kupplung. Insbesondere umfasst der Hybrid-Triebkopf zumindest eine E-Maschine und zumindest einen Drehmomentwandler, welcher insbesondere zumindest bei einem Anfahrvorgang ein Drehmoment einer Antriebseinheit in ein Drehmoment wandelt, das auf eine mit den Rädern des Kraftfahrzeugs verbundene Abtriebseinheit wirkt. Die E-Maschine ist insbesondere von einem Elektromotor gebildet. Bevorzugt ist die E-Maschine insbesondere von einem kreisringförmigen Elektromotor gebildet. Die E-Maschine dient insbesondere zu einer Bereitstellung eines Hybridantriebs. Die E-Maschine bildet insbesondere eine zu einem Verbrennungsmotor parallele Antriebseinheit. Unter einem "Innenlamellenträger" soll insbesondere ein Bauteil der Lamellenkupplung verstanden werden, das dazu vorgesehen ist, zumindest eine Lamelle, insbesondere zumindest eine Innenlamelle, des Lamellenpakets der Lamellenkupplung drehfest zu lagern. Vorzugsweise soll darunter insbesondere ein Bauteil verstanden werden, das dazu vorgesehen ist, radial innenliegende Lamellen des Lamellenpakets der Lamellenkupplung drehfest zu lagern und/oder aufzunehmen. Bevorzugt ist der Innenlamellenträger insbesondere von einer Nabe gebildet. Der Innenlamellenträger ist insbesondere von einer Nabe eines Wandlerdeckels einer Drehmomentwandlervorrichtung des Hybrid-Triebkopfs gebildet. Unter einem "Außenlamellenträger" soll insbesondere ein Bauteil der Lamellenkupplung verstanden werden, das dazu vorgesehen ist, zumindest eine Lamelle, insbesondere zumindest eine Außenlamelle, des weiteren Lamellenpakets der Lamellenkupplung drehfest zu lagern. Vorzugsweise soll darunter insbesondere ein Bauteil verstanden werden, das dazu vorgesehen ist, radial außenliegende Lamellen der Lamellenkupplung drehfest zu lagern und/oder aufzunehmen. Bevorzugt ist der Außenlamellenträger insbesondere von einem Korb, welcher drehfest mit einem Turbinenrad der Drehmomentwandlervorrichtung des Hybrid-Triebkopfs verbunden ist, gebildet. Darunter, dass "die Lamellen an einem Innenumfang einen durchgehenden Ring aufweisen", soll in diesem Zusammenhang insbesondere verstanden werden, dass die Lamellen an einem Innenumfang, also einer nächsten Kontur der Lamellen zu einer Rotationsachse der Lamellen, eine kreisförmige geschlossene Kontur aufweisen. Vorzugsweise soll darunter insbesondere verstanden werden, dass die Lamellen zumindest einen ringförmigen Teilbereich aufweisen, welcher einen geschlossenen Ring ausbildet und direkt an einen Innenumfang der Lamellen anschließt. Vorzugsweise erfolgt eine Zentrierung der Lamellen und insbesondere auch des Distanzelements über den Innendurchmesser des durchgehenden Rings. Dies ermöglicht ein großes Spiel in der Schraubenverbindung zum Toleranzausgleich. Ferner können durch den durchgehenden Ring Verspannungen einzelner, unverbundener Stege durch Teilungsfehler vermieden werden. Des Weiteren kann eine Positionierung der Lamellen und insbesondere auch des Distanzelements bei einer Montage über den Innendurchmesser des durchgehenden Rings erfolgen. Es kann insbesondere ein stabiles Design hinsichtlich der Fertigungsschritte Feinschneiden und/oder Oberflächenbearbeitung und bei Montage und/oder Handling erreicht werden. Ferner soll in diesem Zusammenhang unter einem "Distanzelement" insbesondere ein Element verstanden werden, das zu einer Anordnung in axialer Richtung zwischen zumindest zwei Lamellen vorgesehen ist. Vorzugsweise soll darunter insbesondere ein Element verstanden werden, welches zu einer definierten und gleichmäßigen Beabstandung der Lamellen vorgesehen ist. Unter einer "Ölführungstasche" soll in diesem Zusammenhang insbesondere eine kanalartige Ausnehmung verstanden werden, welche zu einer Führung von Öl vorgesehen ist. Vorzugsweise soll darunter insbesondere eine längliche Vertiefung und/oder Nut verstanden werden. Die Ölführungstasche des Distanzelements weist insbesondere eine Haupterstreckungsrichtung auf, welche sich zumindest im Wesentlichen in radialer Richtung zu einer Rotationsachse der Lamellenkupplung erstreckt. Dabei soll unter einer "Haupterstreckungsrichtung" eines Objekts und/oder einer Ausnehmung insbesondere eine Richtung verstanden werden, welche parallel zu einer längsten Kante eines kleinsten geometrischen Quaders verläuft, welcher das Objekt gerade noch vollständig umschließt und insbesondere durch einen geometrischen Mittelpunkt des geometrischen Quaders verläuft. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Öl" soll in diesem Zusammenhang insbesondere ein Kühl- und/oder Schmieröl verstanden werden. Vorzugsweise soll darunter insbesondere ein Getriebeöl verstanden werden.

Ferner wird vorgeschlagen, dass die zumindest zwei Lamellen des Lamellenpakets in dem durchgehenden Ring jeweils zumindest eine Ölführungstasche aufweisen, welche mit der zumindest einen Ölführungstasche des zumindest einen Distanzelements verbunden ist. Vorzugsweise erstrecken sich die Ölführungstaschen der Lamellen im Wesentlichen axial. Bevorzugt sind die Ölführungstaschen der Lamellen an einer Innenkontur der Lamellen angeordnet. Vorzugsweise sind die Ölführungstaschen in den Lamellen radial innerhalb des durchgehenden Rings angeordnet. Die Ölführungstaschen der Lamellen sind insbesondere dazu vorgesehen, Öl, welches von dem Innenlamellenträger radial nach außen geführt wird, in die Ölführungstasche des zumindest einen Distanzelements zu führen, um einen radialen Ölfluss zu ermöglichen. Vorzugsweise entspricht ein Querschnitt der Ölführungstaschen mindestens dem geringsten Querschnitt in einem vorgeschalteten, ölführenden Kanalsystem, insbesondere zur Vermeidung von Drosselstellen und damit verbundenen Druckverlusten. Ferner entspricht zur Vermeidung von Drosselstellen und damit verbundenen Druckverlusten insbesondere der sich ergebende Querschnitt der Ölführungstasche des Distanzelements außerhalb des durchgehenden Rings der Lamellen mindestens dem Querschnitt der Ölführungstaschen in den Lamellen. Die Umfangsposition der Ölführungstaschen relativ zueinander wird insbesondere über die Befestigungsposition der Lamellen und des Distanzelements sichergestellt. Dadurch kann insbesondere eine besonders zuverlässige Ölführung durch die Lamellenkupplung erreicht werden. Hierdurch kann insbesondere ein ausreichender Volumenstrom zur Kühlung der Lamellen der Lamellenkupplung sichergestellt werden. Es kann insbesondere ein Temperaturniveau im Kupplungspaket gering gehalten werden. Es kann insbesondere ein Ölfluss zwischen verschiedenen Teilen der Lamellenkupplung erreicht werden. Es kann insbesondere erreicht werden, dass sich das Öl in den Ölführungstaschen der Lamellen und in der Ölführungstasche des Distanzelements axial verteilt und in der Ölführungstasche des Distanzelements radial über den durchgehenden Ring hinweg fließt. Anschließend kann sich das Öl dann wieder in den Zwischenräumen der Lamellen axial bzw. zwischen den Lamellen auch radial verteilen.

Zudem wäre insbesondere denkbar, die Ölführungstaschen als Poka-Yoke Lösung zur Absicherung der lagerichtigen Montage der Lamellen durch eine asymmetrische Teilung zwischen Befestigungsbohrungen und Ölführungstaschen in den Lamellen zu nutzen.

Des Weiteren wird vorgeschlagen, dass die zumindest zwei Lamellen jeweils radial aufeinanderfolgend zumindest einen Klemmbereich mit dem durchgehenden Ring, zumindest einen Federbereich mit federnden Stegen und zumindest einen Reibbereich mit zumindest einer Reibfläche aufweisen. Vorzugsweise bestehen die Lamellen jeweils aus dem Klemmbereich, dem Federbereich und dem Reibbereich. Bevorzugt bildet der Klemmbereich eine Innenkontur und der Reibbereich eine Außenkontur der Lamellen aus. Der Reibbereich ist insbesondere über die federnden Stege des Federbereichs mit dem Klemmbereich verbunden. Besonders bevorzugt erstrecken sich der zumindest eine Klemmbereich, der zumindest eine Federbereich und der zumindest eine Reibbereich der Lamellen jeweils über annähernd ein Drittel des gesamten Lamellenradiusbereichs, also von einem Innenradius radial zu einem Außenradius. Dadurch kann insbesondere eine vorteilhafte Lamellengeometrie der Lamellen der Lamellenkupplung erreicht werden. Durch die Lamellengeometrie kann insbesondere eine gleichmäßige Flächenpressung im geschlossenen Zustand und ein reversibles Trennen der Reibflächen im offenen Zustand gewährleistetet werden. Unter einem "Klemmbereich" soll in diesem Zusammenhang insbesondere ein Bereich einer Lamelle, insbesondere einer Innenlamelle, verstanden werden, in welchem die Lamelle an einem Lamellenträger, insbesondere dem Innenlamellenträger, fixiert ist. Vorzugsweise soll darunter insbesondere ein Bereich verstanden werden, über welchen die Lamellen miteinander und drehfest mit dem Innenlamellenträger verbunden sind. In dem Klemmbereich ist insbesondere der durchgehende Ring angeordnet, über welchen die Lamellen bevorzugt miteinander und mit dem Innenlamellenträger verschraubt sind. Ferner soll in diesem Zusammenhang unter einem "Federbereich" insbesondere ein Bereich einer Lamelle, insbesondere einer Innenlamelle, verstanden werden, über welchen der Reibbereich zumindest teilweise federnd mit dem Klemmbereich verbunden ist. Vorzugsweise soll darunter insbesondere ein Bereich verstanden werden, welcher dazu vorgesehen ist, den Reibbereich in Umfangsrichtung federnd mit dem Klemmbereich zu verbinden. Unter einem "Reibbereich" soll in diesem Zusammenhang insbesondere ein Bereich einer Lamelle, insbesondere einer Innenlamelle, verstanden werden, welcher bei einer Betätigung der Lamellenkupplung zu einer direkten Kontaktierung eines Reibbereichs einer weiteren Lamelle, insbesondere einer Außenlamelle, vorgesehen ist. Vorzugsweise weist der Reibbereich eine Reibfläche zu einer direkten Kontaktierung eines korrespondierenden Reibbereichs auf. Die Reibfläche ist bevorzugt mit einem Reibbelag versehen.

Es wird ferner vorgeschlagen, dass die zumindest zwei Lamellen jeweils zwischen den federnden Stegen des Federbereichs jeweils einen offenen Ölbereich ausbilden, welche mit der zumindest einen Ölführungstasche des zumindest einen Distanzelements verbunden sind. Die federnden Stege des Federbereichs sind insbesondere in Umfangsrichtung gleichmäßig zwischen dem Klemmbereich und dem Reibbereich verteilt. Die federnden Stege erstrecken sich insbesondere jeweils von einer Außenkontur des Klemmbereichs zu einer Innenkontur des Reibbereichs. Vorzugsweise ist in Umfangsrichtung zwischen den federnden Stegen jeweils eine Lücke angeordnet, welche als offener Ölbereich ausgebildet ist. Dadurch kann insbesondere radial außerhalb des durchgehenden Rings eine zuverlässige Ölverteilung erreicht werden. Es kann insbesondere erreicht werden, dass sich das Öl axial bzw. zwischen den Lamellen auch radial verteilt. Dadurch kann insbesondere eine besonders zuverlässige Ölführung durch die Lamellenkupplung erreicht werden. Unter einem "offenen Ölbereich" soll in diesem Zusammenhang insbesondere ein großflächiger Bereich verstanden werden, welcher zu einer Verteilung des Öls dient. Vorzugsweise soll darunter insbesondere ein von einem Ölführungskanal, welcher zu einer Führung des Öls vorgesehen ist, verschiedener Bereich verstanden werden. Der offene Ölbereich dient insbesondere zu einer großflächigen Verteilung des Öls. Der offene Ölbereich erstreckt sich insbesondere ausgehend von dem durchgehenden Ring hin zu dem Reibbereich.

Es wird weiter vorgeschlagen, dass der Innenlamellenträger zumindest einen sich zumindest im Wesentlichen radial erstreckenden Ölkanal aufweist, welcher zu einer Ölführung vorgesehen ist. Vorzugsweise ist der Ölkanal dazu vorgesehen, Öl, insbesondere Getriebeöl, für eine Kühlung und/oder Schmierung der zumindest einen Lamellenkupplung an der Lamellenkupplung bereitzustellen. Bevorzugt dient der Ölkanal insbesondere dazu, die Lamellenkupplung radial von innen nach außen mit Öl zu versorgen. Besonders bevorzugt erfolgt ein Ölstrom über eine Zuleitung durch ein Nabeninneres über den Ölkanal, welcher insbesondere als Querbohrung zum Zentrierdurchmesser der Lamellen und dem Distanzelement ausgebildet ist, hin zu dem Lamellenpaket. Dadurch kann insbesondere eine zuverlässige Bereitstellung von Öl an der Lamellenkupplung erreicht werden. Es kann insbesondere erreicht werden, dass die Lamellenkupplung von innen heraus mit Öl versorgt wird. Bei einer Ausbildung des Innenlamellenträgers an der Nabe, kann Öl über den Ölkanal direkt zu den Lamellen der Lamellenkupplung geführt werden. Unter einem "Ölkanal" soll in diesem Zusammenhang insbesondere ein Kanal verstanden werden, welcher zu einer Führung von Öl, insbesondere von Getriebeöl, vorgesehen ist. Vorzugsweise soll darunter insbesondere ein Kanal verstanden werden, durch welchen passiv oder aktiv Öl, insbesondere Getriebeöl, geführt werden kann.

Ferner wird vorgeschlagen, dass eine Umfangsposition der zumindest einen Ölführungstasche der Lamellen zumindest im Wesentlichen einer Umfangsposition des Ölkanals des Innenlamellenträgers entspricht. Bevorzugt entspricht eine Umfangsposition, relativ zu einer Rotationsachse der Lamellenkupplung, der zumindest einen Ölführungstasche der Lamellen zumindest im Wesentlichen einer Umfangsposition, relativ zu einer Rotationsachse der Lamellenkupplung, des Ölkanals des Innenlamellenträgers. Vorzugsweise ist die Ölführungstasche der Lamellen mit dem Ölkanal des Innenlamellenträgers verbunden. Über den Ölkanal des Innenlamellenträgers kann insbesondere Öl direkt in die Ölführungstasche der Lamellen fließen. Die Umfangsposition der Lamellen wird insbesondere über die Befestigungsposition der Lamellen sichergestellt. Dadurch kann insbesondere eine besonders zuverlässige Ölführung durch die Lamellenkupplung erreicht werden. Hierdurch kann insbesondere ein ausreichender Volumenstrom zur Kühlung der Lamellen der Lamellenkupplung sichergestellt werden. Es kann insbesondere ein Temperaturniveau im Kupplungspaket gering gehalten werden. Es kann insbesondere ein Ölfluss zwischen verschiedenen Teilen der Lamellenkupplung erreicht werden.

Des Weiteren wird vorgeschlagen, dass die zumindest eine Ölführungstasche der Lamellen jeweils außerhalb eines Befestigungsbereichs des Klemmbereichs und außerhalb eines Funktionsbereichs des Federbereichs angeordnet sind. Vorzugsweise ist die zumindest eine Ölführungstasche zwischen zwei benachbarten Befestigungsbereichen des Klemmbereichs der jeweiligen Lamelle angeordnet. Die Ölführungstasche ist daher insbesondere außerhalb von stabilitätskritischen Bereichen der Lamelle angeordnet. Dadurch kann insbesondere trotz der zumindest einen Ölführungstasche eine vorteilhaft hohe Stabilität der Lamellen erreicht werden. Es kann insbesondere eine vorteilhaft zuverlässige Lamellenkupplung bereitgestellt werden. Unter einem "Befestigungsbereich" des Klemmbereichs soll in diesem Zusammenhang insbesondere ein Teilbereich des Klemmbereichs verstanden werden, der in einem montierten Zustand mit einer Klemmkraft zu einer Befestigung der jeweiligen Lamelle beaufschlagt ist. Vorzugsweise soll darunter insbesondere ein Teilbereich des Klemmbereichs um eine Befestigungsbohrung des Klemmbereichs verstanden werden. Ferner soll in diesem Zusammenhang unter einem "Funktionsbereich" insbesondere ein Teilbereich des Federbereichs verstanden werden, der bei einer Abfederung des Reibbereichs gegenüber dem Klemmbereich elastisch verformt wird. Vorzugsweise sollen darunter insbesondere die federnden Stege des Federbereichs verstanden werden.

Es wird ferner vorgeschlagen, dass die zumindest eine Lamellenkupplung radial innerhalb der E-Maschine angeordnet ist. Vorzugsweise umgreift die E-Maschine zumindest teilweise die Lamellenkupplung des Hybrid-Triebkopfs. Bevorzugt ist die E-Maschine insbesondere von einem kreisringförmigen Elektromotor gebildet. Die E-Maschine dient insbesondere zu einer Bereitstellung eines Hybridantriebs. Dadurch kann insbesondere ein vorteilhaft kompakter Hybrid-Triebkopf bereitgestellt werden. Durch den kompakten Aufbau der Lamellenkupplung kann insbesondere vorteilhaft eine Anordnung der E-Maschine radial außerhalb der Lamellenkupplung erreicht werden. Durch den geringen Durchmesser der Lamellenkupplung werden insbesondere mehr Lamellen zur Darstellung der benötigten Reibfläche benötigt. Zur Erreichung einer zuverlässigen Kupplungswirkung bei vielen Reibflächen sind insbesondere die Federbereiche an den Lamellen sowie fest angebundene Lamellen vorgesehen. Durch den inneren durchgehenden Ring kann insbesondere verhindert werden, dass sich die federnden Stege des Federbereichs verwinden bzw. verdrehen. Unter "radial innerhalb" soll in diesem Zusammenhang insbesondere verstanden werden, dass ein minimaler Abstand der E-Maschine zu einer Rotationsachse der Lamellenkupplung größer ist als ein minimaler Abstand der Lamellenkupplung zu der Rotationsachse der Lamellenkupplung. Vorzugsweise ist die E-Maschine in zumindest einer Ebene, welche die E-Maschine und die Lamellenkupplung schneidet und sich senkrecht zu der Rotationsachse der Lamellenkupplung erstreckt, ausgehend von der Rotationsachse der Lamellenkupplung außerhalb der Lamellenkupplung angeordnet.

Zudem wird vorgeschlagen, dass die zumindest eine Lamellenkupplung innerhalb eines Rotors der E-Maschine angeordnet ist. Dadurch kann insbesondere ein vorteilhaft kompakter Hybrid-Triebkopf bereitgestellt werden. Durch den kompakten Aufbau der Lamellenkupplung kann insbesondere vorteilhaft eine Anordnung des Rotors der E-Maschine radial außerhalb der Lamellenkupplung erreicht werden, insbesondere da der Rotor bevorzugt mit zumindest einem Teil der Lamellenkupplung mitdrehen kann.

Es wird weiter vorgeschlagen, dass die zumindest eine Lamellenkupplung von einer Wandlerüberbrückungskupplung gebildet ist. Dadurch kann insbesondere ein vorteilhaft effizienter Hybrid-Triebkopf bereitgestellt werden. Unter einer "Wandlerüberbrückungskupplung" soll in diesem Zusammenhang insbesondere eine Kupplung eines Drehmomentwandlers verstanden werden, welche zu einer Überbrückung von drehmomentwandelnden Teilen des Drehmomentwandlers vorgesehen ist. Vorzugsweise soll darunter insbesondere eine Kupplung verstanden, welche ein Pumpenrad und ein Turbinenrad des Drehmomentwandlers mechanisch verbindet. Hierdurch entsteht insbesondere eine direkte mechanische Verbindung zwischen Antriebs- und Abtriebsseite des Drehmomentwandlers, wobei eine Drehmomentwandlung unterbunden wird.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung eines Kraftfahrzeugs mit einer Antriebseinheit und mit einem Kraftfahrzeuggetriebe, welches einen Hybrid-Triebkopf aufweist, in einer schematischen Darstellung,
- Fig.2: das Kraftfahrzeuggetriebe mit dem Hybrid-Triebkopf, welcher eine Lamellenkupplung aufweist, in einer schematischen Schnittdarstellung,
- Fig.3: einen Teilausschnitt III-III des Hybrid-Triebkopfs mit der Lamellenkupplung, welche einen Innenlamellenträger, einen Außenlamellenträger, ein erstes Lamellenpaket und ein zweites Lamellenpaket aufweist, in einer schematischen Schnittdarstellung,
- Fig.4: den Teilausschnitt III-III des Hybrid-Triebkopfs mit der Lamellenkupplung in einer alternativen Drehstellung des Innenlamellenträgers, in einer schematischen Schnittdarstellung,

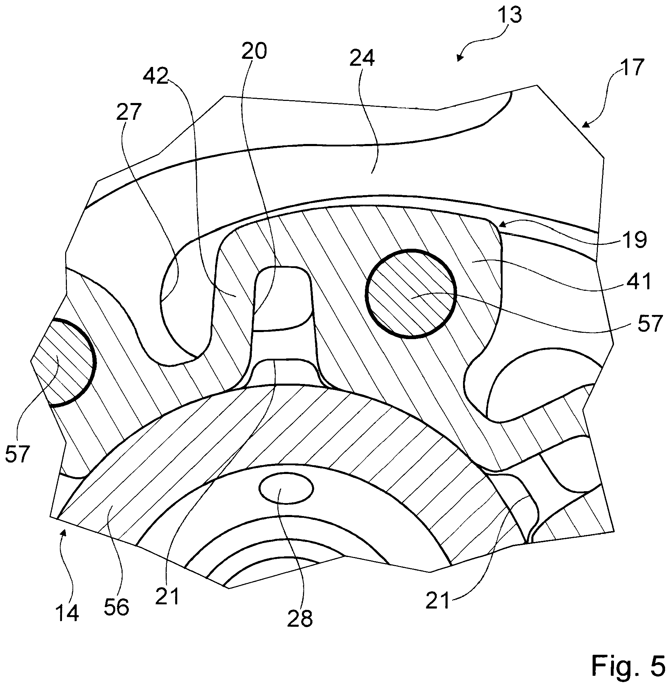

- Fig.5: ein Teilausschnitt der Lamellenkupplung mit dem Lamellenpaket und mit zwischen Lamellen des Lamellenpakets angeordneten Distanzelementen in einer schematischen Schnittdarstellung entlang der Schnittlinie V-V,
- Fig. 6: eine Lamelle des Lamellenpakets der Lamellenkupplung in einer schematischen Draufsicht und
- Fig.7: ein Distanzelement der Lamellenkupplung in einer schematischen Draufsicht.

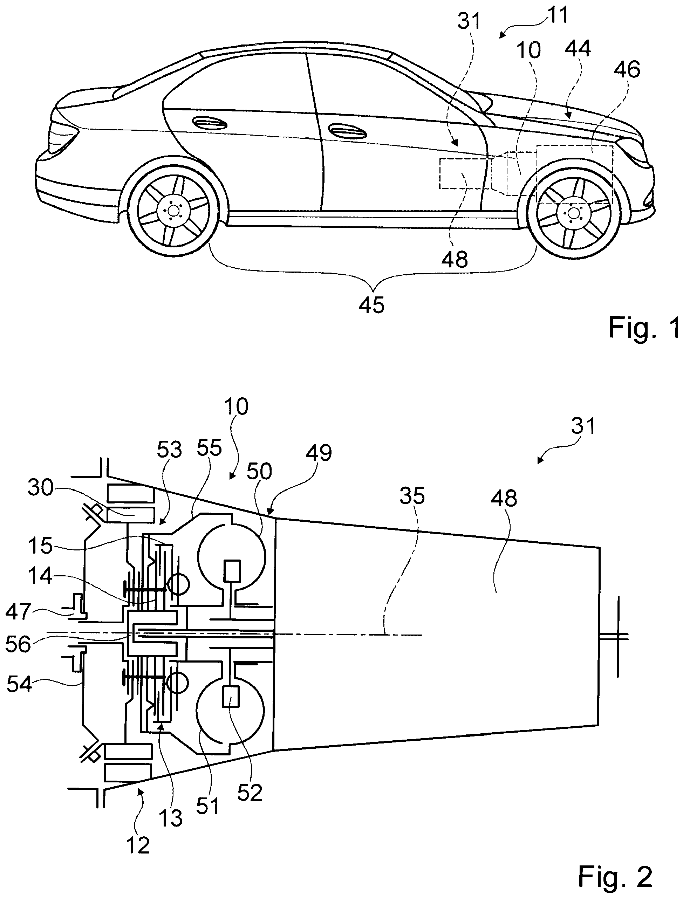

Die Figur 1 zeigt schematisch ein Kraftfahrzeug 11. Das Kraftfahrzeug 11 ist von einem Hybrid-Kraftfahrzeug gebildet. Das Kraftfahrzeug 11 umfasst einen Antriebsstrang 44, über welchen nicht weiter sichtbar Antriebsräder 45 des Kraftfahrzeugs 11 angetrieben werden. Der Antriebsstrang 44 umfasst eine Antriebseinheit 46. Die Antriebseinheit 46 ist von einem Verbrennungsmotor gebildet. Ferner umfasst das Kraftfahrzeug 11 eine weitere Antriebseinheit, welche in ein Kraftfahrzeuggetriebe 31 des Kraftfahrzeugs 11 integriert ist. Die weitere Antriebseinheit bildet ein Teil des Kraftfahrzeuggetriebes 31. Die weitere Antriebseinheit ist von einer E-Maschine 12 gebildet. Die E-Maschine 12 ist von einem Elektromotor gebildet. Die Antriebseinheit 46 weist eine angetriebene Kurbelwelle 47 auf, welche in das Kraftfahrzeuggetriebe 31 ragt. Das Kraftfahrzeug 11 weist das Kraftfahrzeuggetriebe 31 auf. Das Kraftfahrzeuggetriebe 31 bildet einen Teil des Antriebsstrangs 44 des Kraftfahrzeugs 11. Das Kraftfahrzeuggetriebe 31 ist entlang des Antriebsstrangs 44, insbesondere entlang eines Kraftflusses des Antriebsstrangs 44, hinter der Antriebseinheit 46 angeordnet. Das Kraftfahrzeuggetriebe 31 wird in zumindest einem Betriebszustand über die Antriebseinheit 46 angetrieben. Das Kraftfahrzeuggetriebe 31 weist einen Hybrid-Triebkopf 10 und ein Automatikgetriebe 48 auf. Der Hybrid-Triebkopf 10 ist entlang eines Kraftflusses vor dem Automatikgetriebe 48 angeordnet. Die Kurbelwelle 47 der Antriebseinheit 46 ragt in den Hybrid-Triebkopf 10 des Kraftfahrzeuggetriebes 31. Der Hybrid-Triebkopf 10 ist für das Kraftfahrzeug 11 vorgesehen. Der Hybrid-Triebkopf 10 weist die E-Maschine 12 auf (Figur 2).

Ferner weist der Hybrid-Triebkopf 10 eine Wandlereinheit 49 auf. Die Wandlereinheit 49 bildet einen Drehmomentwandler aus. Die Wandlereinheit 49 umfasst ein Pumpenrad 50, ein Turbinenrad 51 und ein Leitrad 52, die für eine hydrodynamische Drehmomentübertragung vorgesehen sind. Das Pumpenrad 50 weist eine Mehrzahl von Schaufeln auf, die dazu vorgesehen sind, ein Betriebsmittel, wie insbesondere ein Öl, zu erfassen und zu beschleunigen. Das Pumpenrad 50 ist dazu vorgesehen, im Wesentlichen drehfest mit der Kurbelwelle 47 der Antriebseinheit 46 verbunden zu werden. Das Pumpenrad 50 ist dazu mit einem Wandlerdeckel 53 des Hybrid-Triebkopfs 10 verbunden. Der Wandlerdeckel 53 des Hybrid-Triebkopfs 10 ist wiederum über eine Flexplate 54 des Hybrid-Triebkopfs 10 mit der Kurbelwelle 47 der Antriebseinheit 46 verbunden. Für eine Übertragung des von der Antriebseinheit 46 bereitgestellten Drehmoments wandelt das Pumpenrad 50 eine von der Antriebseinheit 46 bereitgestellte mechanische Energie in Strömungsenergie um. Das Pumpenrad 50 bildet eine Primärseite der Wandlereinheit 49 aus. Das Turbinenrad 51 ist dazu vorgesehen, die von dem Pumpenrad 50 bereitgestellte Strömungsenergie aufzunehmen und als mechanische Energie bereitzustellen. Das Turbinenrad 51 ist dazu vorgesehen, mit einer Getriebeeingangswelle des dem Hybrid-Triebkopf 10 nachgeschalteten Automatikgetriebes 48 verbunden zu werden. Das Turbinenrad 51 bildet eine Sekundärseite der Wandlereinheit 49 aus. Die Wandlereinheit 49 umfasst ferner einen Freilauf, der dazu vorgesehen ist, das Leitrad 52 gehäusefest abzustützen (Figur 2).

Des Weiteren weist der Hybrid-Triebkopf 10 den Wandlerdeckel 53 auf. Der Wandlerdeckel 53 ist dazu vorgesehen, das Turbinenrad 51 und das Leitrad 52 zu übergreifen und eine Antriebsbewegung der Antriebseinheit 46 auf das Pumpenrad 50 zu übertragen. Der Wandlerdeckel 53 weist eine Deckelschale 55 und eine mit der Deckelschale 55 fest verbundene Nabe 56 auf. Die Nabe 56 bildet eine Rotationsachse des Wandlerdeckels 53. Die Deckelschale 55 ist im Wesentlichen schalenförmig ausgebildet. Mittels der Schalenform der Deckelschale 55 wird ein Übergreifen realisiert. Die Deckelschale 55 schließt an das Pumpenrad 50 der Wandlereinheit 49 an. Die Deckelschale 55 schließt mit einer radial äußeren Kante an das Pumpenrad 50 an. Die Deckelschale 55 ist nicht weiter sichtbar drehfest mit dem Pumpenrad 50 verbunden. Ferner ist die Deckelschale 55 einstückig mit der Nabe 56 ausgebildet. Die Nabe 56 ist über eine Schweißnaht mit der Deckelschale 55 verbunden. Die Schweißnaht ist von einer umlaufenden Schweißnaht gebildet. Die Deckelschale 55 ist über eine radial innenliegende Kante mit der Nabe 56 verbunden. Ferner weist die Nabe 56 auf ihrer Mantelfläche einen kreisringförmigen Fortsatz auf, an welchen die Deckelschale 55 mittels der Schweißnaht angeschweißt ist.

Die Nabe 56 weist ferner eine gestufte Kontur auf. Eine Kontur der Nabe 56 bildet zwei Stufen aus. Die Nabe 56 weist daher entlang der Rotationsachse des Wandlerdeckels 53 unterschiedliche Radien auf, wobei die Stufen jeweils einen zumindest im Wesentlichen konstanten Radius aufweisen. Die Nabe 56 weist eine radial innere Stufe auf. Ferner weist die Nabe 56 eine radial äußere Stufe auf. Der kreisringförmige Fortsatz der Nabe 56 ist auf einer Außenkontur der radial äußeren Stufe angeordnet. Die radial innere Stufe schließt auf einer dem Turbinenrad 51 zugewandten Seite an die radial äußere Stufe an.

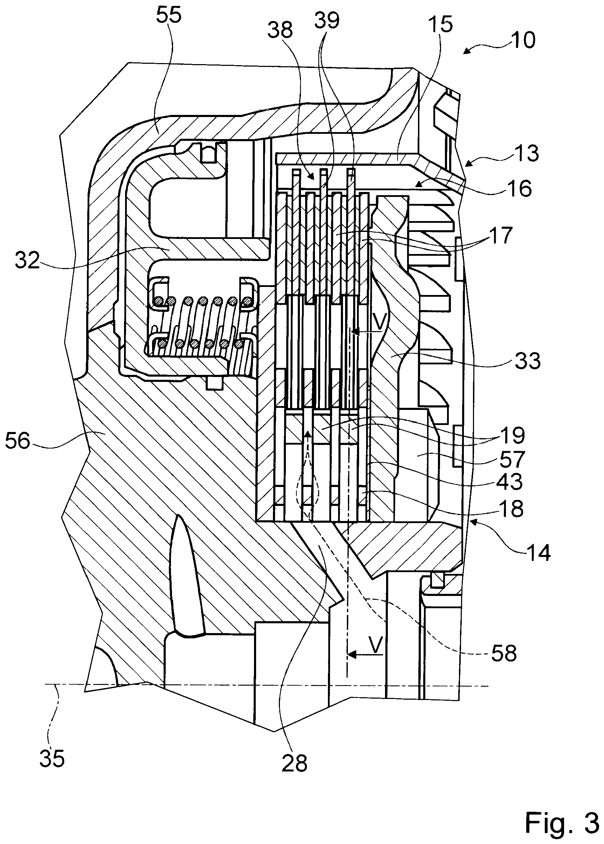

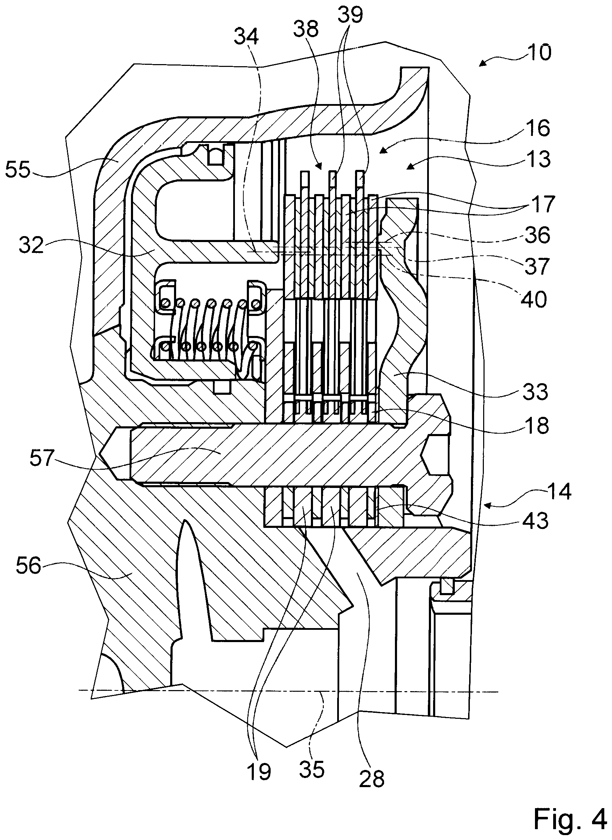

Ferner weist der Hybrid-Triebkopf 10 eine Lamellenkupplung 13 auf. Die Lamellenkupplung 13 ist von einer Wandlerüberbrückungskupplung gebildet. Die Lamellenkupplung 13 ist in zumindest einem Betriebszustand dazu vorgesehen, das Pumpenrad 50 und das Turbinenrad 51 mechanisch miteinander zu verbinden. Die Lamellenkupplung 13 verbindet dazu den Wandlerdeckel 53 mechanisch mit dem Turbinenrad 51. Die Lamellenkupplung 13 weist einen Innenlamellenträger 14 auf. Der Innenlamellenträger 14 ist drehfest mit dem Wandlerdeckel 53 verbunden. Die Nabe 56 des Wandlerdeckels 53 bildet den Innenlamellenträger 14 der Lamellenkupplung 13 aus. Die Nabe 56 ist einstückig mit dem Innenlamellenträger 14 ausgebildet. Der Innenlamellenträger 14 ist an der radial inneren Stufe der Nabe 56 ausgebildet. Ferner weist die Lamellenkupplung 13 einen Außenlamellenträger 15 auf. Der Außenlamellenträger 15 ist drehfest mit dem Turbinenrad 51 verbunden. Der Außenlamellenträger 15 ist von einem den Innenlamellenträger 14 übergreifenden Korb gebildet. In der Figur 4 ist der Außenlamellenträger 15 der Übersichtlichkeit halber ausgeblendet. Ferner weist die Lamellenkupplung 13 ein Lamellenpaket 16 auf. Das Lamellenpaket 16 ist fest an dem Innenlamellenträger 14 angebunden. Das Lamellenpaket 16 weist zumindest zwei Lamellen 17 auf. Das Lamellenpaket 16 weist mehrere Lamellen 17 auf. Das Lamellenpaket 16 weist beispielhaft vier Lamellen 17 auf. Die Lamellen 17 sind identisch ausgebildet (Figur 3, 4).

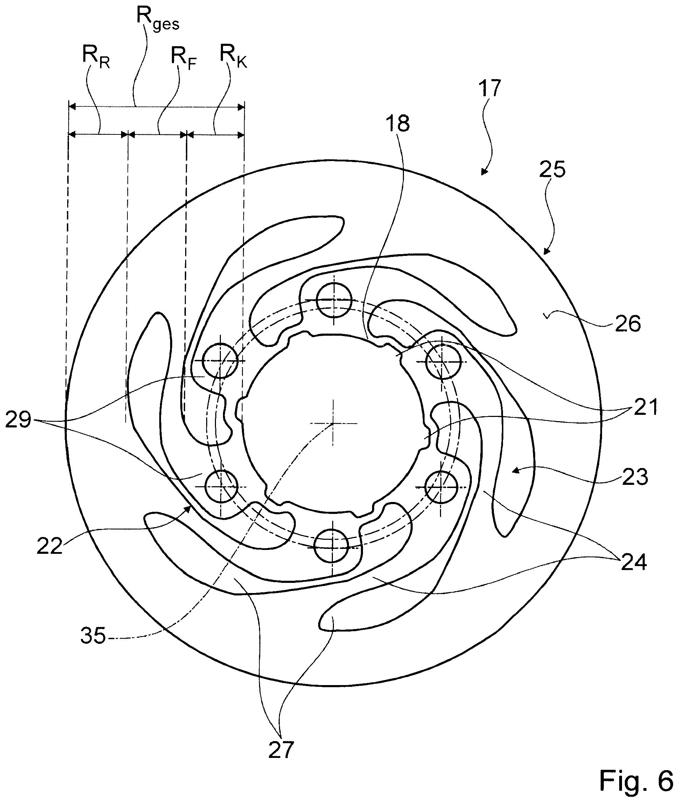

Die Lamellen 17 sind jeweils von Stahllamellen gebildet. Die Lamellen 17 bestehen aus einer dünnen Stahlplatte. Die Lamellen 17 weisen eine Dicke von annähernd 1,5 mm auf. Ferner weisen die Lamellen 17 einen Durchmesser von annähernd 160 mm auf. Die Lamellen 17 weisen jeweils eine ringförmige Grundform auf, welche sich in Umfangsrichtung um eine Rotationsachse 35 des Lamellenpakets 16 erstreckt. Ferner weisen die Lamellen 17 jeweils an einem Innenumfang einen durchgehenden Ring 18 auf. Ein Innenumfang der Lamellen 17 ist daher geschlossen ausgebildet. Die Lamellen 17 weisen jeweils drei radiale Bereiche auf. Die Lamellen 17 weisen einen Klemmbereich 22 auf. Der Klemmbereich 22 grenzt direkt an den Innenradius der jeweiligen Lamelle 17 an. Der Klemmbereich 22 umfasst den durchgehenden Ring 18. Ferner weist der Klemmbereich 22 mehrere Befestigungsbereiche 29 in dem durchgehenden Ring 18 auf. Der Klemmbereich 22 weist beispielhaft sechs Befestigungsbereiche 29 auf. Die Befestigungsbereiche 29 sind in Umfangsrichung gleichmäßig an dem Innenumfang der Lamellen 17 verteilt. Die Befestigungsbereiche 29 sind jeweils von Befestigungsringen zu einer Verschraubung der Lamellen 17 an dem Innenlamellenträger 14 gebildet. Die Lamellen 17 können daher durch den als Befestigungsring ausgebildeten Befestigungsbereich 29 hindurch verschraubt werden. Ferner weisen die Lamellen 17 einen Reibbereich 25 auf. Der Reibbereich 25 ist von einem radial außenliegenden Reibbereich 25 gebildet. Der Reibbereich 25 weist zwei Reibflächen 26 auf. Die Reibflächen 26 sind auf gegenüberliegenden Stirnseiten der jeweiligen Lamelle 17 angeordnet. Die Reibflächen 26 erstrecken sich parallel zu einer Haupterstreckungsebene der jeweiligen Lamelle 17. Die Reibflächen 26 sind jeweils ringförmig ausgebildet. Des Weiteren weisen die Lamellen 17 jeweils einen Federbereich 23 auf. Der Federbereich 23 ist radial innerhalb des Reibbereichs 25 angeordnet. Radial innerhalb des Reibbereichs 25 ist der Federbereich 23 und der Klemmbereich 22 angeordnet. Die Lamellen 17 weisen daher jeweils radial aufeinanderfolgend den Klemmbereich 22 mit dem durchgehenden Ring 18, den Federbereich 23 mit federnden Stegen 24 und den Reibbereich 25 mit den Reibflächen 26 auf. Der Federbereich 23 ist zwischen dem Klemmbereich 22 und dem Reibbereich 25 angeordnet. Der Federbereich 23 verbindet den Reibbereich 25 federnd mit dem Klemmbereich 22. Der Federbereich 23 weist dazu die federnden Stege 24 auf. Der Federbereich 23 weist beispielhaft sechs federnde Stege 24 auf. Die federnden Stege 24 sind jeweils von S-förmigen Stegen gebildet, die sich von einem Außenumfang des Klemmbereichs 22 zu einem Innenumfang des Reibbereichs 25 erstrecken. Die federnden Stege 24 erstrecken sich jeweils von den Befestigungsbereichen 29 des Klemmbereichs 22 hin zu einem Innenumfang des Reibbereichs 25. Die federnden Stege 24 einer Lamelle 17 sind jeweils in Umfangsrichtung um die Rotationsachse 35 des Lamellenpakets 16 gleichmäßig verteilt. Zwischen den federnden Stegen 24 ist jeweils eine Lücke angeordnet. Der Klemmbereich 22, der Federbereich 23 und der Reibbereich 25 der Lamellen 17 erstrecken sich jeweils über annähernd ein Drittel des gesamten Lamellenradiusbereichs R_{ges}. Ein Radiusbereich R_{K} des Klemmbereichs 22, ein Radiusbereich R_{F} des Federbereichs 23 und ein Radiusbereich R_{R} des Reibbereichs 25 sind im Wesentlichen identisch (Figur 6).

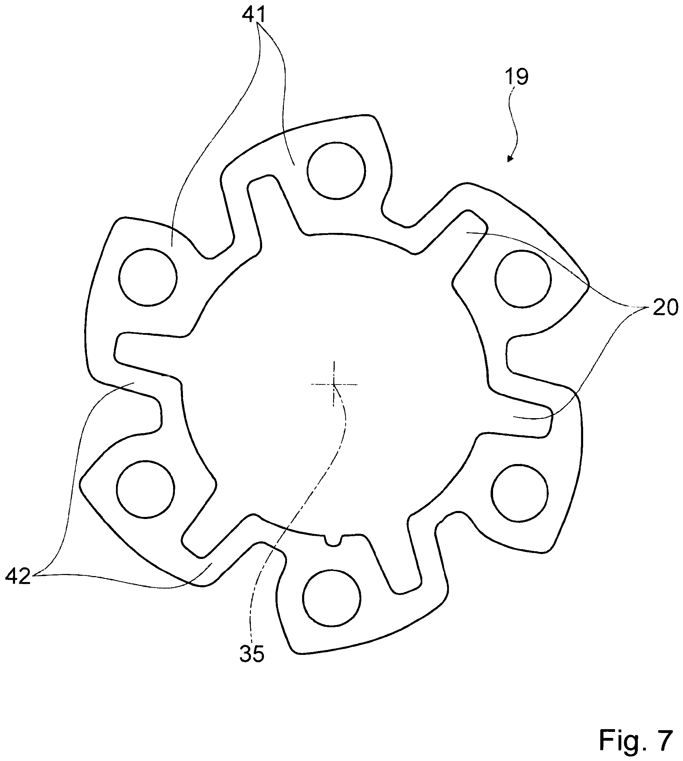

Die Lamellenkupplung 13 weist ferner mehrere zwischen den Lamellen 17 angeordnete Distanzelemente 19 auf. Die Distanzelemente 19 sind jeweils zwischen jedem Paar von benachbarten Lamellen 17 angeordnet. Zwischen jedem Paar von benachbarten Lamellen 17 ist ein Distanzelement 19 angeordnet. Die Lamellenkupplung 13 weist beispielhaft drei Distanzelemente 19 auf. Die Distanzelemente 19 sind zu einer gleichmäßigen Beabstandung der Lamellen 17 vorgesehen. Die Distanzelemente 19 sind an dem Innenlamellenträger 14 angeordnet. Die Lamellen 17 und die Distanzelemente 19 sind an dem Innenlamellenträger 14 angeordnet. Die Distanzelemente 19 sind jeweils identisch ausgebildet. Die Distanzelemente 19 sind jeweils als Zwischenblech ausgebildet. Die Distanzelemente 19 weisen jeweils eine Dicke von annähernd 3 mm auf. Die Distanzelemente 19 weisen jeweils eine ringförmige Grundform auf. Ferner weisen die Distanzelemente 19 jeweils mehrere Befestigungsringe 41 sowie mehrere die Befestigungsringe 41 verbindende, S-förmige Stege 42 auf. Die Distanzelemente 19 weisen beispielhaft sechs Befestigungsringe 41 und sechs S-förmige Stege 42 auf. Die S-förmigen Stege 42 und die Befestigungsringe 41 eines Distanzelements 19 sind jeweils einstückig ausgebildet. Die Distanzelemente 19 sind beispielhaft in einem Stanzprozess hergestellt Die Befestigungsringe 41 dienen zu einer Befestigung der Distanzelemente 19 an dem Innenlamellenträger 14. Die Distanzelemente 19 können durch die Befestigungsringe 41 hindurch an dem Innenlamellenträger 14 verschraubt werden. Die Befestigungsringe 41 eines Distanzelements 19 sind jeweils auf einem gemeinsamen Radius in Umfangsrichtung gleichmäßig verteilt angeordnet. Die S-förmigen Stege 42 verbinden die Befestigungsringe 41 desselben Distanzelements 19. Die S-förmigen Stege 42 erstrecken sich jeweils von einem ersten Befestigungsring 41 von einer radialen Innenseite des Distanzelements 19 zu einem benachbarten zweiten Befestigungsring 41 zu einer radialen Außenseite des Distanzelements 19 hin. Ferner sind die Distanzelemente 19 zumindest in einem wesentlichen Teilbereich flach geschliffen. Die Distanzelemente 19 sind zumindest an den Stirnseiten der Befestigungsringe 41 flach geschliffen. Grundsätzlich wäre jedoch auch denkbar, dass die kompletten Stirnseiten der Distanzelemente 19 flach geschliffen sind (Figur 7).

Des Weiteren weist die Lamellenkupplung 13 ein zweites Lamellenpaket 38 auf. Das zweite Lamellenpaket 38 ist drehfest mit dem Außenlamellenträger 15 verbunden. Das zweite Lamellenpaket 38 ist drehfest axial beweglich in dem Außenlamellenträger 15 mittels einer Verzahnung gehalten. Ferner umfasst das zweite Lamellenpaket 38 zumindest zwei Lamellen 39. Das zweite Lamellenpaket 38 weist mehrere Lamellen 39 auf. Das zweite Lamellenpaket 38 weist beispielhaft drei Lamellen 39 auf. Die Lamellen 39 sind jeweils von Stahllamellen gebildet. Ferner sind die Lamellen 39 des zweiten Lamellenpakets 38 mit Reibbelägen versehen. Die Lamellen 39 des zweiten Lamellenpakets 38 greifen jeweils von außen in Lücken zwischen den Lamellen 17 des Lamellenpakets 16. Mittels der Distanzelemente 19 werden die Lamellen 17 des Lamellenpakets 16 derart beabstandet, dass, in einem unbetätigten Zustand der Lamellenkupplung 13, in axialer Richtung ein Spalt zwischen den Lamellen 17, 39 angeordnet ist (Figur 3).

Die Lamellen 17 des Lamellenpakets 16 der Lamellenkupplung 13 sind zusammen mit den Distanzelementen 19 und mit einem Gegenhalter 33 der Lamellenkupplung 13 mittels Schrauben 57 an den Innenlamellenträger 14 angeschraubt. Die Lamellen 17 sind auf der radial inneren Stufe der Nabe 56 in axialer Richtung gegen eine Stirnseite der radial äußeren Stufe verschraubt. Die Schrauben 57 sind zu einer Verschraubung durch die Befestigungsbereiche 29 der Lamellen 17 sowie durch die Befestigungsringe 41 der Distanzelemente 19 geführt. Die Schrauben 57 sind beispielhaft von einer Dehnschraube gebildet. Zu einer Verbesserung einer Flächenpressung ist ein Schraubenkopf der Schrauben 57 nachträglich plangedreht. Der Gegenhalter 33 ist auf einer Seite der Lamellen 17 angeordnet. Die Lamellen 17 der Lamellenkupplung 13 erstrecken sich ringförmig um die Nabe 56. In einem unbetätigten Zustand der Lamellenkupplung 13 ist der Außenlamellenträger 15 relativ zu dem Innenlamellenträger 14 drehbar. Ferner weist die Lamellenkupplung 13 einen Betätigungskolben 32 zu einer Betätigung der Lamellenkupplung 13 auf. Der Betätigungskolben 32 erstreckt sich ringförmig um die Nabe 56 des Wandlerdeckels 53. Der Betätigungskolben 32 ist in radialer Richtung gegenüber der Rotationsachse 35 des Lamellenpakets 16 im Wesentlichen dicht zwischen der Nabe 56 und einer Innenseite der Deckelschale 55 angeordnet. Der Betätigungskolben 32 liegt in radialer Richtung an einer Innenseite einer Stufe der Deckelschale 55 an. Der Betätigungskolben 32 ist an der radial äußeren Stufe der Nabe 56 angeordnet. Die Nabe 56 bildete eine untere Kolbenlaufbahn des Betätigungskolbens 32. Ferner ist der Betätigungskolben 32 in axialer Richtung gegenüber der Rotationsachse 35 des Lamellenpakets 16 zwischen der Deckelschale 55 und den Lamellen 17 des Lamellenpakets 16 angeordnet. Der Gegenhalter 33 ist auf einer dem Betätigungskolben 32 abgewandten Seite der Lamellen 17 des Lamellenpakets 16 angeordnet. Der Gegenhalter 33 ist zu einem axialen Abstützen des Lamellenpakets 16 gegen einen Druck des Betätigungskolbens 32 vorgesehen. Bei einer Betätigung der Lamellenkupplung 13 wird der Betätigungskolben 32 in axialer Richtung gegen die Lamellen 17 des Lamellenpakets 16 gedrückt, sodass die Lamellen 17 des Lamellenpakets 16 und die als Außenlamellen ausgebildeten Lamellen 39 des zweiten Lamellenpakets 38 reibschlüssig verbunden werden. Der Gegenhalter 33 dient dabei dazu, eine der Kraft des Betätigungskolbens 32 entgegengerichtete Kraft aufzubringen, welche ein Wegdrücken und/oder ein Ausweichen der Lamellen 17, 39 verhindern soll. Durch den Aufbau weist die Lamellenkupplung 13 einen vorteilhaft geringen Durchmesser auf. Ferner weist die Lamellenkupplung 13 eine Zwischenlage 43 auf. Die Zwischenlage 43 ist zwischen dem Lamellenpaket 16 und dem Betätigungskolben 32 und/oder dem Gegenhalter 33 angeordnet. Die Zwischenlage 43 ist zumindest zwischen dem Lamellenpaket 16 und dem Gegenhalter 33 angeordnet. Die Zwischenlage 43 ist von einer Stahlfolie gebildet. Die Zwischenlage 43 weist eine Stärke von 0,2 mm auf. Die Zwischenlage 43 ist zu einem Ausgleich einer ungleichmäßigen Einspannsituation vorgesehen (Figur 4).

Des Weiteren weist der Betätigungskolben 32 einen Druckpunkt 34 auf. Der Druckpunkt 34 des Betätigungskolbens 32 definiert dabei einen Punkt, in welchem der Betätigungskolben 32 die Lamellen 17 des Lamellenpakets 16 bei einer Betätigung der Lamellenkupplung 13 kontaktiert. Der Druckpunkt 34 des Betätigungskolbens 32 ist ringförmig ausgebildet. Der Gegenhalter 33 weist ferner einen Gegendruckpunkt 36 auf.

Der Gegendruckpunkt 36 des Gegenhalters 33 definiert dabei einen Punkt, in welchem der Gegenhalter 33 die Lamellen 17 des Lamellenpakets 16 bei einer Betätigung der Lamellenkupplung 13 kontaktiert. Der Gegendruckpunkt 36 des Gegenhalters 33 ist ringförmig ausgebildet. Der Druckpunkt 34 des Betätigungskolbens 32 weist einen geringeren radialen Abstand zu der Rotationachse 35 des Lamellenpakets 16 auf als der Gegendruckpunkt 36 des Gegenhalters 33. Der Druckpunkt 34 des Betätigungskolbens 32 und der Gegendruckpunkt 36 des Gegenhalters 33 sind radial in einem Nahbereich eines mittleren Radius 37 des Reibbereichs 25 der Lamellen 17 angeordnet. Ein radialer Abstand des Druckpunkts 34 des Betätigungskolbens 32 zu der Rotationachse 35 des Lamellenpakets 16 und ein radialer Abstand des Gegendruckpunkts 36 des Gegenhalters 33 zu der Rotationachse 35 des Lamellenpakets 16 entspricht demnach im Wesentlichen einem Wert des mittleren Radius 37 des Reibbereichs 25 der Lamellen 17 des Lamellenpakets 16, also dem radialen Abstand des mittleren Radius 37 zu der Rotationachse 35 des Lamellenpakets 16. Ein relativ zu der Rotationachse 35 des Lamellenpakets 16 radialer Abstand des Druckpunkts 34 und des Gegendruckpunkts 36 zu dem mittleren Radius 37 beträgt maximal 2 mm. Ferner weist der Druckpunkt 34 des Betätigungskolbens 32 einen geringeren radialen Abstand zu der Rotationachse 35 des Lamellenpakets 16 auf als der mittlere Radius 37 des Reibbereichs 25 der Lamellen 17. Der Gegendruckpunkt 36 des Gegenhalters 33 weist einen größeren radialen Abstand zu der Rotationachse 35 des Lamellenpakets 16 auf als der mittlere Radius 37 des Reibbereichs 25 der Lamellen 17. Die Lamellen 39 des zweiten Lamellenpakets 38 weisen ebenfalls einen Reibbereich mit einer Reibfläche auf. Der Druckpunkt 34 des Betätigungskolbens 32 und der Gegendruckpunkt 36 des Gegenhalters 33 weisen jeweils einen größeren radialen Abstand zu einer Rotationachse 35 des zweiten Lamellenpakets 38 auf als ein mittlerer Radius 40 des Reibbereichs der Lamellen 39 des zweiten Lamellenpakets 38. Das Lamellenpaket 16 und das zweite Lamellenpaket 38 weisen dieselbe Rotationachse 35 auf (Figur 4).

Des Weiteren weist der Innenlamellenträger 14 zumindest einen sich im Wesentlichen radial erstreckenden Ölkanal 28 auf. Der Innenlamellenträger 14 weist mehrere Ölkanäle 28 auf. Die Ölkänale 28 sind zu einer Ölführung vorgesehen ist. Die Ölkänale 28 sind dazu vorgesehen, Öl, insbesondere Getriebeöl, für eine Kühlung und Schmierung der Lamellenkupplung 13 an der Lamellenkupplung 13 bereitzustellen. Die Ölkänale 28 dienen dazu, die Lamellenkupplung 13 radial von innen nach außen mit Öl zu versorgen. Der Ölstrom erfolgt dabei über eine Zuleitung durch ein Nabeninneres. Die Ölkanäle 28 sind in die Nabe 56 eingebracht. Die Ölkänale 28 führen an die radial innere Stufe der Nabe 56. Die Ölkänale 28 erstrecken sich jeweils von einer inneren Aufnahme der Nabe 15 durch die Nabe 56 an die radial innere Stufe. Die Ölkänale 28 sind in Umfangsrichtung gleichmäßig verteilt. Die innere Aufnahme der Nabe 56 ist von einer Achsaufnahme gebildet. Die innere Aufnahme der Nabe 56 ist im Bereich der Rotationsachse 35 des Lamellenpakets 16 angeordnet. Die innere Aufnahme der Nabe 56 ist gegenüber der Rotationsachse 35 rotationssymmetrisch ausgebildet (Figur 2).

Ferner weisen die Distanzelemente 19 zumindest eine Ölführungstasche 20 auf. Die Distanzelemente 19 weisen mehrere Ölführungstaschen 20 auf. Die Distanzelemente 19 weisen beispielhaft jeweils sechs Ölführungstaschen 20 auf. Die Ölführungstaschen 20 erstrecken sich jeweils von dem Innenlamellenträger 14 radial nach außen. Die Ölführungstaschen 20 erstrecken sich jeweils von dem Innenlamellenträger 14 radial nach außen über die durchgehenden Ringe 18 der Lamellen 17 hinweg. Die Ölführungstaschen 20 sind jeweils dazu vorgesehen, Öl an den durchgehenden Ringen 18 der Lamellen 17 vorbeizuführen, um einen radialen Ölfluss zu gewährleisten. Die Ölführungstaschen 20 sind jeweils von Materialaussparungen gebildet, welche sich von einer Innenkontur radial nach außen erstrecken. Die Ölführungstaschen 20 sind jeweils von in axialer Richtung durchgehenden Materialaussparungen gebildet. Die Ölführungstaschen 20 sind in Umfangsrichtung um die Rotationsachse 35 des Lamellenpakets 16 gleichmäßig verteilt. Die Ölführungstaschen 20 sind jeweils direkt neben einem der Befestigungsringe 41 angeordnet (Figur 3, 7).

Die Lamellen 17 des Lamellenpakets 16 weisen ferner jeweils in dem durchgehenden Ring 18 zumindest eine Ölführungstasche 21 auf. Die Lamellen 17 des Lamellenpakets 16 weisen jeweils in dem durchgehenden Ring 18 mehrere Ölführungstaschen 21 auf. Die Ölführungstaschen 21 sind mit den Ölführungstaschen 20 der Distanzelemente 19 verbunden. Die Ölführungstaschen 21 der Lamellen 17 erstrecken sich im Wesentlichen axial. Ferner sind die Ölführungstaschen 21 der Lamellen 17 an der Innenkontur der Lamellen 17 angeordnet. Die Ölführungstaschen 21 der Lamellen 17 sind radial innerhalb des durchgehenden Rings 18 angeordnet. Die Ölführungstaschen 21 der Lamellen 17 sind ferner jeweils außerhalb der Befestigungsbereiche 29 des Klemmbereichs 22 und außerhalb eines Funktionsbereichs des Federbereichs 23, also außerhalb eines Bereichs der federnden Stege 24, angeordnet. Die Ölführungstaschen 21 der Lamellen 17 sind in Umfangsrichtung jeweils direkt neben einem der Befestigungsbereiche 29 des Klemmbereichs 22 angeordnet. Die Ölführungstaschen 21 der Lamellen 17 sind dazu vorgesehen, Öl, welches von dem über die Ölkanäle 28 des Innenlamellenträgers 14 radial nach außen geführt wird, in die Ölführungstaschen 20 der Distanzelemente 19 zu führen, um einen radialen Ölfluss 58 zu ermöglichen. Die Ölführungstaschen 21 sind in Umfangsrichtung um die Rotationsachse 35 des Lamellenpakets 16 gleichmäßig verteilt. Eine Umfangsposition der Ölführungstaschen 21 der Lamellen 17 entspricht im Wesentlichen einer Umfangsposition der Ölkanäle 28 des Innenlamellenträgers 14. Ferner entspricht eine Umfangsposition der Ölführungstaschen 21 der Lamellen 17 im Wesentlichen der Umfangsposition der Ölführungstaschen 20 der Distanzelemente 19. Dadurch sind die Ölkanäle 28 mit den Ölführungstaschen 21 der Lamellen 17 verbunden und die Ölführungstaschen 21 der Lamellen 17 mit den Ölführungstaschen 20 der Distanzelemente 19. Über die Ölkanäle 28 des Innenlamellenträgers 14 kann dadurch Öl direkt in die Ölführungstaschen 21 der Lamellen 17 und von dort in die Ölführungstaschen 20 der Distanzelemente 19 fließen. Die Umfangsposition der Lamellen 17 und der Distanzelemente 19 wird über die Befestigungsposition der Lamellen 17 und der Distanzelemente 19 sichergestellt (Figur 3, 6).

Des Weiteren bilden die Lamellen 17 des Lamellenpakets 16 jeweils zwischen den federnden Stegen 24 des Federbereichs 23 offene Ölbereiche 27 aus. Die Lamellen 17 weisen daher beispielhaft sechs offene Ölbereiche 27 auf. Die offenen Ölbereiche 27 sind jeweils mit den Ölführungstaschen 20 der Distanzelemente 19 verbunden. Die offenen Ölbereiche 27 erstrecken sich jeweils ausgehend von dem durchgehenden Ring 19 hin zu dem Reibbereich 25 der jeweiligen Lamelle 17. Die offenen Ölbereiche 27 dienen zu einer großflächigen Verteilung des Öls, um in dem Reibbereich 25 einen vorteilhaft gleichmäßigen und homogenen Ölfilm zu erreichen. Das Öl wird den offenen Ölbereichen 27 über die Ölkanäle 28, über die Ölführungstaschen 21 der Lamellen 17 und über die Ölführungstaschen 20 der Distanzelemente 19 zugeführt. Ein Ölfluss 58 des Öls erfolgt daher von einem Nabeninneren in die Ölkanäle 28 des Innenlamellenträgers 14. Von den Ölkanälen 28 aus erfolgt der Ölfluss 58 direkt in die Ölführungstaschen 21 der Lamellen 17, von wo aus das Öl axial in die Ölführungstaschen 20 der Distanzelemente 19 fließt. Über die Ölführungstaschen 20 der Distanzelemente 19 geht der Ölfluss 58 weiter in die offenen Ölbereiche 27, von wo aus das Öl in die Reibbereiche 25 der Lamellen 17 gelangt (Figur 3, 6).

Die E-Maschine 12 des Hybrid-Triebkopfs 10 ist teilweise radial außerhalb der Lamellenkupplung 13 angeordnet. Die Lamellenkupplung 13 ist radial innerhalb der E-Maschine 12 angeordnet. Die E-Maschine 12 weist einen Rotor 30 auf. Die Lamellenkupplung 13 ist innerhalb des Rotors 30 der E-Maschine 12 angeordnet. Dadurch kann eine besonders kompakte Anordnung erreicht werden. Es kann insbesondere ein Durchmesser des Hybrid-Triebkopfs 10 gering gehalten werden. Insbesondere kann der Hybrid-Triebkopf 10 dadurch vorteilhaft axial kompakt ausgeführt werden. Durch die kompakte Anordnung der Lamellenkupplung 13 kann die E-Maschine 12 radial um die Lamellenkupplung 13 angeordnet werden.

### Bezugszeichenliste

- 10: Hybrid-Triebkopf
- 11: Kraftfahrzeug
- 12: E-Maschine
- 13: Lamellenkupplung
- 14: Innenlamellenträger
- 15: Außenlamellenträger
- 16: Lamellenpaket
- 17: Lamelle
- 18: Ring
- 19: Distanzelement
- 20: Ölführungstasche
- 21: Ölführungstasche
- 22: Klemmbereich
- 23: Federbereich
- 24: Steg
- 25: Reibbereich
- 26: Reibfläche
- 27: Ölbereich
- 28: Ölkanal
- 29: Befestigungsbereich
- 30: Rotor
- 31: Kraftfahrzeuggetriebe
- 32: Betätigungskolben
- 33: Gegenhalter
- 34: Druckpunkt
- 35: Rotationsachse
- 36: Gegendruckpunkt
- 37: Radius
- 38: Lamellenpaket
- 39: Lamelle
- 40: Radius
- 41: Befestigungsring
- 42: Steg
- 43: Zwischenlage
- 44: Antriebsstrang
- 45: Antriebsrad
- 46: Antriebseinheit
- 47: Kurbelwelle
- 48: Automatikgetriebe
- 49: Wandlereinheit
- 50: Pumpenrad
- 51: Turbinenrad
- 52: Leitrad
- 53: Wandlerdeckel
- 54: Flexplate
- 55: Deckelschale
- 56: Nabe
- 57: Schraube
- 58: Ölfluss

- R_{ges}: Lamellenradiusbereich
- R_{K}: Radiusbereich
- R_{F}: Radiusbereich
- R_{R}: Radiusbereich

## Patentansprüche

1. Hybrid-Triebkopf für ein Kraftfahrzeug (11), mit zumindest einer E-Maschine (12) und mit zumindest einer Lamellenkupplung (13), die einen Innenlamellenträger (14), einen Außenlamellenträger (15) und zumindest ein fest an dem Innenlamellenträger (14) angebundenes Lamellenpaket (16) aufweist, das zumindest zwei Lamellen (17) umfasst, welche jeweils an einem Innenumfang einen durchgehenden Ring (18) aufweisen, **dadurch gekennzeichnet, dass** die zumindest eine Lamellenkupplung (13) zumindest ein zwischen den zumindest zwei Lamellen (17) angeordnetes Distanzelement (19) aufweist, welches an dem Innenlamellenträger (14) angeordnet ist und zu einer gleichmäßigen Beabstandung der Lamellen (17) vorgesehen ist und zumindest eine Ölführungstasche (20) aufweist, welche sich von dem Innenlamellenträger (14) radial nach außen über die durchgehenden Ringe (18) der Lamellen (17) hinweg erstreckt.

2. Hybrid-Triebkopf nach Anspruch 1,
**dadurch gekennzeichnet, dass**
die zumindest zwei Lamellen (17) des Lamellenpakets (16) in dem durchgehenden Ring (18) jeweils zumindest eine Ölführungstasche (21) aufweisen, welche mit der zumindest einen Ölführungstasche (20) des zumindest einen Distanzelements (19) verbunden ist.

3. Hybrid-Triebkopf nach Anspruch 1 oder 2,
**dadurch gekennzeichnet, dass**
die zumindest zwei Lamellen (17) jeweils radial aufeinanderfolgend zumindest einen Klemmbereich (22) mit dem durchgehenden Ring (18), zumindest einen Federbereich (23) mit federnden Stegen (24) und zumindest einen Reibbereich (25) mit zumindest einer Reibfläche (26) aufweisen.

4. Hybrid-Triebkopf nach Anspruch 3,
**dadurch gekennzeichnet, dass**
die zumindest zwei Lamellen (17) jeweils zwischen den federnden Stegen (24) des Federbereichs (23) jeweils einen offenen Ölbereich (27) ausbilden, welche mit der zumindest einen Ölführungstasche (20) des zumindest einen Distanzelements (19) verbunden sind.

5. Hybrid-Triebkopf nach einem der vorhergehenden Ansprüche,
**dadurch gekennzeichnet, dass**
der Innenlamellenträger (14) zumindest einen sich zumindest im Wesentlichen radial erstreckenden Ölkanal (28) aufweist, welcher zu einer Ölführung vorgesehen ist.

6. Hybrid-Triebkopf nach Anspruch 2 und 5,
**dadurch gekennzeichnet, dass**
eine Umfangsposition der zumindest einen Ölführungstasche (21) der Lamellen (17) zumindest im Wesentlichen einer Umfangsposition des Ölkanals (28) des Innenlamellenträgers (14) entspricht.

7. Hybrid-Triebkopf nach Anspruch 2,
**dadurch gekennzeichnet, dass**
die zumindest eine Ölführungstasche (21) der Lamellen (17) jeweils außerhalb eines Befestigungsbereichs (29) des Klemmbereichs (22) und außerhalb eines Funktionsbereichs des Federbereichs (23) angeordnet ist.

8. Hybrid-Triebkopf nach einem der vorhergehenden Ansprüche,
**dadurch gekennzeichnet, dass**
die zumindest eine Lamellenkupplung (13) radial innerhalb der E-Maschine (12) angeordnet ist.

9. Hybrid-Triebkopf nach Anspruch 8,
**dadurch gekennzeichnet, dass**
die zumindest eine Lamellenkupplung (13) innerhalb eines Rotors (30) der E-Maschine (12) angeordnet ist.

10. Hybrid-Triebkopf nach einem der vorhergehenden Ansprüche,
**dadurch gekennzeichnet, dass**
die zumindest eine Lamellenkupplung (13) von einer Wandlerüberbrückungskupplung gebildet ist.

11. Kraftfahrzeuggetriebe mit einem Hybrid-Triebkopf (10) nach einem der vorhergehenden Ansprüche.

## Claims

1. Hybrid traction head for a motor vehicle (11), having at least one electric machine (12) and at least one multi-disc clutch (13) comprising an inner disc carrier (14), an outer disc carrier (15) and at least one disc pack (16) permanently joined to the inner disc carrier (14) and comprising at least two discs (17), each of which has a continuous ring (18) at an inner circumference,
**characterised in that**
the at least one multi-disc clutch (13) has at least one spacer element (19), which is located between the at least two discs (17) and is located at the inner disc carrier (14) and which is provided for a regular spacing of the discs (17) and has at least one oil guidance pocket (20) extending radially outwards from the inner disc carrier (14) beyond the continuous rings (18) of the discs (17).

2. Hybrid traction head according to claim 1,
**characterised in that**
each of the at least two discs (17) of the disc pack (16) has in the continuous ring (18) at least one oil guidance pocket (21), which is connected to the at least one oil guidance pocket (20) of the at least one spacer element (19).

3. Hybrid traction head according to claim 1 or 2,
**characterised in that**
each of the at least two discs (17) has, in a radially consecutive arrangement, at least one clamping region (22) with the continuous ring (18), at least one spring region (23) with resilient webs (24) and at least one friction region (25) with at least one friction surface (26).

4. Hybrid traction head according to claim 3,
**characterised in that**
each of the at least two discs (17) forms between the resilient webs (24) of the spring region (23) an open oil region (27) connected to the at least one oil guidance pocket (20) of the at least one spacer element (19).

5. Hybrid traction head according to any of the preceding claims,
**characterised in that**
the inner disc carrier (14) has at least one at least substantially radially extending oil passage (28) provided for oil guidance.

6. Hybrid traction head according to claims 2 and 5,
**characterised in that**
a circumferential position of the at least one oil guidance pocket (21) of the discs (17) corresponds at least substantially to a circumferential position of the oil passage (28) of the inner disc carrier (14).

7. Hybrid traction head according to claim 2,
**characterised in that**
the at least one oil guidance pocket (21) of the discs (17) is in each case located outside of a fastening region (29) of the clamping region (22) and outside of a functional region of the spring region (23).

8. Hybrid traction head according to any of the preceding claims,
**characterised in that**
the at least one multi-disc clutch (13) is located radially within the electric machine (12).

9. Hybrid traction head according to claim 8,
**characterised in that**
the at least one multi-disc clutch (13) is located within a rotor (30) of the electric machine (12).

10. Hybrid traction head according to any of the preceding claims,
**characterised in that**
the at least one multi-disc clutch (13) is represented by a direct-drive clutch.

11. Motor vehicle gearbox having a hybrid traction head according to any of the preceding claims.

## Revendications

1. Automotrice hybride pour un véhicule à moteur (1), comprenant au moins une machine électrique (12) et comprenant au moins un embrayage à disques (13) qui comporte au moins un ensemble de disques (16) disposé à demeure sur le support de disques intérieur (14), ledit ensemble de disques comprenant au moins deux disques (17) qui comportent chacun une bague continue (18) sur une circonférence intérieure **caractérisée en ce que** ledit embrayage à disques (13) présente au moins un élément d'écartement (19) disposé entre lesdits deux disques (17), qui est disposé sur le support de disques intérieur (14) et qui sert à apporter une distance régulière entre les disques (17) et au moins une alvéole de guidage d'huile (20) qui s'étend depuis le support de disques intérieur (14) radialement vers l'extérieur par-dessus les bagues continues (18) des disques.

2. Automotrice hybride selon la revendication 1, **caractérisée en ce que** lesdits deux disques (17) de l'ensemble de disques (16) comportent dans la bague continue (18) respectivement au moins une alvéole de guidage d'huile (21), qui est reliée au moins à ladite alvéole de guidage d'huile (20) dudit élément d'écartement (19).

3. Automotrice hybride selon la revendication 1 ou la revendication 2, **caractérisée en ce que** lesdits deux disques (17) comportent respectivement dans cet ordre, radialement, au moins une zone de serrage (22) dotée de la bague continue (18), au moins une zone ressort (23) dotée d'entretoises à ressort (24) et au moins une zone de friction (25) dotée d'au moins une surface de friction (25).

4. Automotrice hybride selon la revendication 3, **caractérisée en ce que** lesdits deux disques (17) forment respectivement entre les entretoises à ressort (24) de la zone ressort (23) chacun une zone ouverte pour l'huile (27), qui sont reliées à ladite alvéole de guidage d'huile (20) dudit élément d'écartement (19).

5. Automotrice hybride selon l'une quelconque des revendications précédentes, **caractérisée en ce que** le support de disques intérieur (14) comporte au moins un canal d'huile (28) s'étendant au moins sensiblement radialement, qui sert au guidage de l'huile.

6. Automotrice hybride selon la revendication 2 ou la revendication 5, **caractérisée en ce qu'**une position circonférentielle de ladite alvéole de guidage d'huile (21) des disques (17) correspond au moins sensiblement à une position circonférentielle du canal d'huile (28) du support de disques intérieurs (14).

7. Automotrice hybride selon la revendication 2, **caractérisée en ce que** ladite alvéole de guidage d'huile (21) des disques (17) est respectivement disposée à l'extérieur d'une zone de fixation (29) de la zone de serrage (22) et à l'extérieur d'une zone fonctionnelle de la zone ressort (23).

8. Automotrice hybride selon la revendication 8, **caractérisée en ce que** ledit embrayage à disques (13) est disposé radialement à l'intérieur de la machine électrique (12).

9. Automotrice hybride selon la revendication 8, **caractérisée en ce que** ledit embrayage à disques (13) est disposé à l'intérieur d'un rotor (30) de la machine électrique (12).

10. Automotrice hybride selon l'une quelconque des revendications précédentes, **caractérisée en ce que** ledit embrayage à disques (13) est conçu sous la forme d'un embrayage à pontage de convertisseur.

11. Boîte de vitesses de véhicule à moteur comprenant une automotrice hybride (10) selon l'une quelconque des revendications précédentes.
